# EUROPÄISCHE PATENTSCHRIFT

(11) **EP 2 359 204 B1**
(45) Veröffentlichungstag und Bekanntmachung des Hinweises auf die Patenterteilung: **28.09.2016**
(21) Anmeldenummer: 09796373.0
(22) Anmeldetag: 17.12.2009
(51) Int. Cl.: G05B 19/418, B64F 5/00

(54) **ADAPTIVES ZENTRALES WARTUNGSSYSTEM UND VERFAHREN ZUM PLANEN VON WARTUNGSVORGÄNGEN VON SYSTEMEN**
ADAPTIVE CENTRAL MAINTENANCE SYSTEM AND METHOD FOR PLANNING MAINTENANCE OPERATIONS FOR SYSTEMS
SYSTÈME DE MAINTENANCE CENTRAL ADAPTATIF ET PROCÉDÉ DE PLANIFICATION D'OPÉRATIONS DE MAINTENANCE DE SYSTÈMES

(30) Priorität: 17.12.2008 DE 102008062630; 17.12.2008 US 201932 P
(43) Veröffentlichungstag der Anmeldung: 24.08.2011
(73) Patentinhaber: Airbus Operations GmbH, 21129 Hamburg (DE)
(72) Erfinder: HOLZER, Werner, 21614 Buxtehude (DE)
(74) Vertreter: Kopf Westenberger Wachenhausen Patentanwälte PartG mbB
(86) Internationale Anmeldenummer: PCT/EP2009/067452
(87) Internationale Veröffentlichungsnummer: WO 2010/070070

(56) Entgegenhaltungen:
- EP-A1- 1 703 449
- WO-A1-2008/012486
- DE-A1-102007 013 324
- US-A- 5 463 768
- US-A- 5 852 814
- US-A1- 2008 252 459
- WILLIAM G FENTON ET AL: "Fault Diagnosis of Electronic Systems Using Intelligent Techniques: A Review" IEEE TRANSACTIONS ON SYSTEMS, MAN, AND CYBERNETICS: PART C:APPLICATIONS AND REVIEWS, IEEE SERVICE CENTER, PISCATAWAY, NJ, US, Bd. 31, Nr. 3, 1. August 2001 (2001-08-01) , XP011057254 ISSN: 1094-6977
- Christiane Gresse von Wangenheim: "Case-Based Reasoning - A Short Introduction" 2000, Seiten 1-7, XP002571606 Gefunden im Internet: URL:http://www.inf.ufsc.br/~patrec/RBC/int rorbc.pdf> [gefunden am 2010-03-04]
- LIANG TANG ET AL: "An Intelligent Agent-based Self-evolving Maintenance and Operations Reasoning System" AEROSPACE CONFERENCE, 2006 IEEE BIG SKY, MT, USA 04-11 MARCH 2006, PISCATAWAY, NJ, USA,IEEE, 4. März 2006 (2006-03-04), Seiten 1-12, XP010928775 ISBN: 978-0-7803-9545-9

## Beschreibung

Die vorliegende Anmeldung beansprucht die Priorität der US Provisional Patentanmeldung Nr. 61/201 932, eingereicht am 17. Dezember 2008 und der deutschen Patentanmeldung Nr. 10 2008 062 630.9, eingereicht am 17. Dezember 2008, deren Inhalte hierin durch Referenz inkorporiert werden.

### TECHNISCHES GEBIET

Die Erfindung betrifft ein adaptives zentrales Wartungssystem für Systeme und ein Verfahren zum Planen von Wartungsvorgängen in Systemen.

### HINTERGRUND DER ERFINDUNG

Im Folgenden wird die vorgestellte Erfindung am Beispiel eines Flugzeugs und genauer gesagt am Beispiel von Systemen und Systemverbünden in einem Flugzeug beschrieben. Es sei jedoch bereits an dieser Stelle darauf hingewiesen, dass die vorgestellte Erfindung keineswegs auf die Anwendung in Flugzeugen beschränkt ist, sondern auf alle Arten von Systemen anzuwenden ist, die mehr oder minder komplexe Systemkomponenten aufweisen und sich in beliebigen Fahrzeugen, Objekten, Maschinen oder dergleichen befinden.

Die Besonderheit bei der Betrachtung von Flugzeugsystemen liegt darin, dass zahlreiche Systemkomponenten als sogenannte "Line Replacement Unit" (LRU) ausgeführt sind, die ein Austauschen innerhalb eines kurzen Bodenaufenthalts ab ca. zwei Stunden erlauben. Dadurch kann ein hoher Nutzungsgrad des Flugzeugs erreicht werden und Wartungsbedarf führt nicht unbedingt sofort zum längeren Stillstand.

Zur Vereinfachung von Wartungsvorgängen weisen moderne Verkehrsflugzeuge häufig ein zentrales Wartungssystem (auch "Central Maintenance System (CMS)" genannt) auf, welches von Systemen innerhalb des Flugzeugs Wartungshinweise erhält, wenn Fehler oder Ausfälle innerhalb eines oder mehrerer Systeme auftreten. Die Aufgabe des zentralen Wartungssystems ist, einem Wartungsteam Wartungshinweise bzw. -ratschläge zu übergeben. Derartige Wartungshinweise beinhalten eine Auflistung von möglichen Systemkomponenten, die zum Wiederherstellen einer nicht mehr ausführbaren Funktion ausgetauscht werden müssten. Idealerweise wird lediglich eine einzige Systemkomponente benannt, die ausgetauscht werden müsste. Bei komplexen Systemen tritt jedoch häufig der Fall ein, dass bei festgestelltem Fehler nicht unmittelbar darauf geschlossen werden kann, welche Systemkomponente dafür verantwortlich ist. Dementsprechend können die Wartungshinweise auch die Angabe mehrerer auszutauschender Systemkomponenten beinhalten, oder die einer möglicherweise nicht korrekten auszutauschenden Systemkomponente. Dies könnte dann zur Folge haben, dass dem Flugzeug eine falsche Systemkomponente entnommen wird. Die entnommene Systemkomponente wird von einem zertifizierten Techniker untersucht, der dann möglicherweise feststellt, dass die entnommene Systemkomponente vollständig intakt und betriebsbereit ist. Daraufhin muss eine andere Systemkomponente des Flugzeugs ausgetauscht und untersucht werden. Die Kosten zum Untersuchen der betreffenden Systemkomponente sind besonders bei Flugzeugsystemen sehr hoch, da derartige Reparaturen oder Untersuchungen ausschließlich von einem geeigneten Techniker unter Beachtung sämtlicher Zulassungsvorschriften durchgeführt werden dürfen. Der Zustand, dass die untersuchte Systemkomponente fehlerfrei ist, wird im folgenden auch als "No Fault Found (NFF)" genannt.

Es ist ferner bei bekannten Wartungssystemen üblich, dass die einem Wartungsteam übermittelten Wartungsnachrichten statisch reproduzierbar sind, so dass bei einem bestimmten festgestellten Fehler stets die gleiche auszutauschende Systemkomponente vorgeschlagen wird. Dadurch kann der Anteil an entnommenen Systemkomponenten mit dem Zustand NFF (fehlerfrei) bei bekannten Wartungssystemen recht hoch sein, besonders dann, wenn das betreffende System komplex ist und viele miteinander interagierende Systemkomponenten aufweist, die eine Fehlerursachenerkennung erschweren.

DE 101 53 151 A1 und US 2003 083 794 A1 betreffen ein Diagnosesystem zur Unterstützung der Flugzeugwartung eines Verkehrsflugzeuges, dadurch gekennzeichnet, dass zumindest eine Sensoreinrichtung zur Erzeugung und Speicherung von Sensorsignalen an zumindest einem Überprüfungsort zur Diagnose von Fehlern an wartungsintensiven Flugzeugsystemen vorgesehen ist, wobei die Sensorsignale an eine Verarbeitungseinheit übermittelbar sind und die Verarbeitungseinheit mit einer Anzeigeeinrichtung mit Anzeige der Sensorsignale und/oder der ermittelten Diagnoseinformationen in Wirkverbindung steht.

Weiterer Stand der Technik ist aus William G Fenton et al. 2001 ("Fault Diagnosis of Electronic Systems") sowie aus Liang Tang et al. 2006 ("An Intelligent Agent-based Self-evolving Maintenance") bekannt. In den Artikeln werden verschiedene Diagnose-Systeme und -Modelle erläutert und teilweise verglichen.

Das Patent DE 10 2007 013324 A1 beschreibt ein Verfahren zur Erfassung wenigstens eines verbauten oder zugeordneten Bestandteils einer medizintechnischen Anlage, insbesondere einer Magnetresonanzanlage, sowie einer zugehörigen medizintechnischen Anlage.

### ZUSAMMENFASSUNG DER ERFINDUNG

Eine Aufgabe der Erfindung könnte darin liegen, ein zentrales Wartungssystem vorzuschlagen, das eine möglichst präzise Aussage über defekte Systemkomponenten treffen und Wartungspersonal anzeigen kann und dabei der Anteil an fehlerfrei entnommenen Systemkomponenten minimiert wird.

Eine weitere Aufgabe der Erfindung könnte darin liegen, ein Verfahren zum Planen von Wartungsvorgängen vorzuschlagen, bei dem der Anteil an fehlerfreien entnommenen Systemkomponenten minimiert wird.

Die Aufgabe wird gelöst durch ein zentrales Wartungssystem mit den Merkmalen gemäß des unabhängigen Anspruchs 1. Vorteilhafte Weiterbildungen sind den Unteransprüchen zu entnehmen.

Zu Beginn der ausführlichen Beschreibung der Erfindung werden an dieser Stelle mehrere Grundbegriffe erläutert. Zum einen wird mit Versagen ("Failure") ein Zustand eines Elements beschrieben, bei dem es unfähig ist, eine gewünschte Funktion innerhalb vorgegebener Grenzen zu erfüllen. Eine Fehlfunktion ("Fault") hingegen wird als eine physikalische Degradierung einer Systemkomponente angesehen, die zu einem Versagen führen könnte. Das Versagen eines Systems kann über symptomatische Fehlfunktionen erkannt werden.

Im Folgenden wird davon ausgegangen, dass ein zu überwachendes System eine oder mehrere zentrale Steuereinheiten aufweist, die in der Lage ist, Fehlfunktionen zu erkennen und diese Fehlfunktionen an ein zentrales Wartungssystem zu kommunizieren. Diese zentrale Steuereinheit ist mit den Systemkomponenten verbunden.

Die Systemkomponenten könnten beliebiger Art sein und der folgenden, nicht umfassenden Übersicht angehören:
- einfache analoge Sensoren, wie etwa analoge Temperatursensoren;
- intelligente Sensoren mit integrierten Mikroprozessoren, wie etwa Feuchtigkeitssensoren;
- einfache elektrische Aktuatoren;
- intelligente und Positionssensoren aufweisende Aktuatoren;
- Heizeinrichtungen;
- örtliche Steuereinheiten eines verteilten Steuersystems mit verteilter Intelligenz;
- Kodier- und Dekodiereinrichtungen, die analoge Signale in digitale Daten umwandeln können und umgekehrt, wie beispielsweise analoge Signale in TCP/IP-Datenströme, oder derartige Einrichtungen, die Datenströme transkodieren, wie etwa CAN- in ADFX-Daten;
- Datenkonzentratoren, die Daten von anderen Systemkomponenten sammeln und über ein Netzwerk an unterschiedliche Datenempfänger weiterleiten;
- Generell Netzwerkelemente, wie etwa Firewalls oder Switches.

Die Verbindung mit der zentralen Steuereinheit könnte beispielhaft durch folgende Möglichkeiten realisiert werden, wobei diese Aufzählung nicht als umfassend angesehen werden soll:
- Diskrete Verdrahtung, die beispielsweise zum Übertragen von diskreten Zuständen (an/aus, 0/1 etc.) dienen, wie etwa offener/geschlossener Stromkreis;
- Analoge Verbindung, beispielsweise ein Temperatursensor- oder Aktuatorbefehlssteuerkreis;
- Digitale Verbindung, wie etwa über ein Netzwerk- oder Bussystem, beispielsweise ARINS 429, CAN, AFDX oder Ethernet.

Über die Datenverbindung zwischen den Systemkomponenten und der zentralen Steuereinheit könnten Systemkonfigurationsdaten und Wartungsdaten übertragen werden.

Gemäß einem ersten Aspekt der vorliegenden Erfindung ist ein erfindungsgemäßes zentrales Wartungssystem adaptiv gestaltet, so dass es in die Lage versetzt wird, aus bereits durchgeführten Wartungsvorgängen zu "lernen" und vor diesem Hintergrund dynamisch Wartungshinweise an ein Wartungsteam anzupassen. Wird in einem System des Flugzeugs eine Fehlfunktion erkannt und diese dem erfindungsgemäßen zentralen Wartungssystem übermittelt, kann das erfindungsgemäße zentrale Wartungssystem über eine Verbindung mit einem oder mehreren Konfigurationssystemen über Konfigurationstabellen feststellen, welche Systemkomponente des Systems defekt sein könnte. Ein derartiges Konfigurationssystem ist als eine Art Datenbank dazu eingerichtet, in Echtzeit festzustellen, welche Systemkomponenten ausgetauscht werden bzw. wurden und wird zumindest bei Flugzeugen von AIRBUS mit "Data Loading and Configuration System" (DLCS) bezeichnet.

Das Konfigurationssystem ist insbesondere dazu eingerichtet, alle Systemkomponenten eines Systems zu registrieren und bei Abfrage etwa bei Übermittlung einer Kennzahl einer Systemkomponente - Informationen über Systemkomponenten auszugeben.

Ein erfindungsgemäßes zentrales Wartungssystem weist mindestens eine Recheneinheit auf, die über eine zentrale Prozessoreinheit, einen Arbeitsspeicher und Eingabe-/Ausgabemittel verfügt. Das erfindungsgemäße Wartungssystem ist über die Eingabe-/Ausgabemittel jeweils mit der mindestens einen Steuereinheit des zu überwachenden Systems verbunden, um Informationen über eventuelle Fehlfunktionen aufnehmen zu können. Das erfindungsgemäße zentrale Wartungssystem ist über die Eingabe-/Ausgabemittel weiterhin unter anderem mit dem Konfigurationssystem verbunden und dazu eingerichtet, bei Bekanntwerden einer Fehlfunktion, die an das erfindungsgemäße zentrale Wartungssystem übermittelt wird, Systemkonfigurationsdaten mit Informationen über sämtliche Systemkomponenten aus dem Konfigurationssystem abzurufen.

Die Recheneinheit ist gemäß einem erfindungsgemäßen Aspekt bevorzugt dazu eingerichtet, über korrespondierende Zuordnungstabellen, die in dem Arbeitsspeicher des erfindungsgemäßen Wartungssystem abgebildet sein könnten, symptomatische Fehlfunktionen einer oder mehrerer Systemkomponenten des zu überwachenden Systems zuzuordnen. Da üblicherweise eine durch ein System festgestellte Fehlfunktion von verschiedenen Systemkomponenten insbesondere in komplexen Systemen hervorgerufen werden kann, kann es möglich sein, dass in der Zuordnungstabelle auch mehrere Ursachen für die aufgetretene Fehlfunktion in Betracht gezogen werden.

Aus diesem Grunde ist die Recheneinheit des erfindungsgemäßen zentralen Wartungssystem bevorzugt dazu eingerichtet, eine Identifizierung des betreffenden Systems bei eingehenden Fehlerdaten durchführen zu können. Ist das zentrale Wartungssystem mit einer Vielzahl von Systemen über deren zentrale Steuereinheiten verbunden, ist dies eine wichtige und notwendige Eigenschaft des zentralen Wartungssystems.

Gemäß einer vorteilhaften Ausführungsform weist das erfindungsgemäße Wartungssystem auch eine oder mehrere zentrale Steuereinheiten auf, die an, in oder in Datenverbindung zu den zu überwachenden Systemkomponenten angeordnet sind. Die im vorangehenden und im folgenden beschriebenen Vorteile von zentralen Steuereinheiten in Bezug auf Überwachung, Fehlerfeststellung, Kommunikation mit dem zentralen Wartungssystem gemäß der vorliegenden Erfindung und dergleichen richten sich dementsprechend auch an das erfindungsgemäße Wartungssystem an sich.

In einer bevorzugten Weiterbildung des erfindungsgemäßen zentralen Wartungssystems ist die Recheneinheit ferner dazu eingerichtet, einen Fehlerfall zu identifizieren, der in einer Abbildung einer Fehlerfalltabelle in dem Arbeitsspeicher der Recheneinheit ersichtlich sein könnte.

In einer weiter bevorzugten Ausführungsform ist die Recheneinheit dazu eingerichtet, Fehlerdaten zu speichern, wobei die Fehlerdaten bevorzugt mit auftretenden oder aufgetretenen Fehlerfällen verknüpft werden können. Derartige Fehlerdaten könnten sich im Falle einer einfachen und einer eingehenderen Fehlerbehandlung mit komplexen Fehlerfällen als nützlich erweisen.

Ferner ist die Recheneinheit des erfindungsgemäßen zentralen Wartungssystems bevorzugt dazu eingerichtet, einen durchzuführenden Wartungsvorgang zu identifizieren, der zu einer Behebung eines festgestellten Fehlerfalls führen könnte. Dies könnte durch Vergleichen des Fehlerfalls mit einer Abbildung einer Fehlerfalltabelle und einer damit verknüpften Bewertungstabelle erfolgen, wobei in der Bewertungstabelle bereits erfolgreich und erfolglos durchgeführte Wartungsvorgänge mit aufgetretenen Fehlerfällen korreliert werden.
Eine derartige Bewertungstabelle könnte Daten über Fehlerfälle, zur Fehlerbehebung vorgenommene Aktionen, zu generierende Wartungshinweise und alternative Wartungshinweise miteinander korrelieren. Die Qualität der erzeugten Wartungshinweise wird durch eine gewisse Wartungshistorie gesteigert. Ist beispielsweise eine bestimmte Fehlfunktion aufgetreten und wurde diese durch Austauschen einer bestimmten Systemkomponente behoben, wird der Behebung dieser entsprechenden Systemkomponente eine bessere Bewertung zugewiesen als dem Austauschvorgang einer alternativen Systemkomponente. Ist dagegen zum Beheben einer festgestellten Fehlfunktion das Austauschen einer Systemkomponente nicht erfolgreich gewesen, kann dem Austauschen dieser betreffenden Systemkomponente eine schlechtere Bewertung zugewiesen werden.

Dementsprechend erreicht ein erfindungsgemäßes zentrales Wartungssystem durch eine derartige Methode eine höhere Qualität an Wartungshinweisen, als dies bei einem statischen System ohne Einfluss einer Wartungshistorie realisiert werden kann.

Weiter bevorzugt ist die Recheneinheit des erfindungsgemäßen zentralen Wartungssystems dazu eingerichtet, Wartungs- oder Reparaturvorgänge bzw. die dazugehörigen Wartungshinweise für sämtliche Fehlerfälle zu speichern, etwa in einem flüchtigen Speicher, beispielsweise dem Arbeitsspeicher, oder einem nichtflüchtigen Speichermedium. Die Wartungshinweise können dann bei Feststellen eines Fehlerfalls dem Wartungspersonal angezeigt werden, so dass eine Durchführung der Wartungsvorgänge erfolgen kann.

Eine weiter bevorzugte Ausführungsform des erfindungsgemäßen zentralen Wartungssystems ist dazu eingerichtet, über die Eingabe-/Ausgabemittel bordeigenen Wartungsterminals, die auch "Onboard Maintenance Terminal (OMT)" genannt werden, Wartungshinweise zu übergeben, so dass sie dort dem Wartungspersonal entsprechend angezeigt werden können.

Ferner ist die Recheneinheit bevorzugt dazu ausgebildet, betreffende empfangene Systemkonfigurationsdaten zu identifizieren. Dadurch kann das mit dem erfindungsgemäßen zentralen Wartungssystem verbundene Konfigurationssystem einen beispielsweise mehrere Kennzahlen aufweisenden angeforderten Datensatz an die Recheneinheit senden, woraufhin diese zweifelsfrei feststellen kann, zu welchem System dieser Datensatz gehört. Dies ist besonders bei komplexen Systemverbünden wichtig, beispielsweise können in modernen Verkehrsflugzeugen mehr als 100 Systeme mit einem zentralen Wartungssystem in Verbindung stehen. Mehrere Datensätze, die von dem Konfigurationssystem an das erfindungsgemäße zentrale Wartungssystem gesandt werden, können dann entsprechend den jeweiligen Systemen zugeordnet werden.

Die Recheneinheit des erfindungsgemäßen zentralen Wartungssystems ist bevorzugt dazu eingerichtet, aus einem eingehenden Datensatz des Konfigurationssystems festzustellen, ob eine Systemkomponente in dem betreffenden identifizierten System ausgetauscht worden ist. Dadurch kann gleichzeitig ermittelt werden, ob ein vor dem Austausch aufgetretener Fehlerfall durch den Austausch der Systemkomponente behoben worden ist. Diese Feststellung eines durchgeführten Austauschs kann durch Vergleichen des Datensatzes von dem Konfigurationssystem mit einem vorher eingegangenen Datensatz vollzogen werden oder durch Identifizieren einer Kennzahl oder dergleichen in dem betreffenden Datensatz, die einen durchgeführten Austausch einer Systemkomponente repräsentiert. Die Feststellung eines behobenen Fehlerfalls kann durch Korrelation von Systemstatusdaten mit Systemkonfigurationsdaten erfolgen. Ein betreffender Korrelationsalgorithmus könnte weiterhin eine Bewertung der durchgeführten Wartungsaktion ausgeben.

In einer bevorzugten Weiterbildung des erfindungsgemäßen zentralen Wartungssystems ist die Recheneinheit dazu eingerichtet, eine Bewertungstabelle, in der Fehlerfälle mit erfolgreichen und erfolglosen Wartungsvorgängen korreliert werden, nach Feststellen eines erfolgreichen Wartungsvorgangs zu aktualisieren. Dies bedeutet, dass Bewertungen in der Bewertungstabelle stets neue Erkenntnisse berücksichtigen, die zur einwandfreien Funktion des Systems oder Systemverbunds führen.

Das erfindungsgemäße zentrale Wartungssystem ist ferner dazu eingerichtet, nach einer Aktualisierung einer Bewertungstabelle Wartungspersonal aufzufordern, eine festgestellte Änderung einer Wartungsstrategie zu validieren. Dadurch könnten eindeutig fehlerhafte Rückschlüsse auf Wartungserfolge vermieden werden, beispielsweise bei defekter zentraler Steuereinheit eines Systems und daraus folgenden eindeutig unsinnigen Korrelationen.

Das erfindungsgemäße zentrale Wartungssystem ist ferner bevorzugt dazu eingerichtet, Wartungsstrategien bzw. aktuelle Bewertungstabellen mit der Korrelation von erfolgreichen und erfolglosen Wartungsvorgängen sowie Fehlerfällen an eine externe Datenbankeinheit, zentrale Wartungssysteme anderer Systemverbünde und dergleichen zu exportieren. Im Falle der Verwendung der erfindungsgemäßen Aspekte bei Verkehrsflugzeugen wäre vorstellbar, Daten von einem bordeigenen zentralen Wartungssystem eines Verkehrsflugzeugs an eine Datenbankeinheit am Boden zu transferieren, die wiederum dazu eingerichtet ist, Wartungsstrategien von mehreren Verkehrsflugzeugen miteinander zu vergleichen und dadurch selbst besonders erfolgversprechende Wartungsstrategien an sämtliche mit der Datenbankeinheit verbundenen Verkehrsflugzeuge kommunizieren zu können.

Das erfindungsgemäße zentrale Wartungssystem ist dementsprechend besonders bevorzugt dazu eingerichtet, durch von extern zugeführte Daten aktualisiert zu werden, so dass bei bereits bekannten Korrelationen von Fehlerfällen und erfolgreichen und erfolglosen Reparaturvorgängen aus anderen zentralen Wartungssystemen stets eine bestmögliche Wartungsstrategie vorliegt.

In einer weiter vorteilhaften Weiterbildung ist das zentrale Wartungssystem dazu eingerichtet, Informationen über einen erfolgten Austausch von Systemkomponenten aus einem Elektronischen Logbuch zu extrahieren. Ein Elektronisches Logbuch enthält eine Sammlung von Beschwerden und die darauf folgenden Wartungsvorgänge, einschließlich Referenznummern aus einem Wartungshandbuch ("Trouble Shooting Manual", TSM), Referenznummern von ausgeführten Entnahmen und Installationsvorgängen von Systemkomponenten, etc.

Eine vorteilhafte Ausführungsform des erfindungsgemäßen zentralen Wartungssystems könnte Kommunikationsmittel umfassen, die zum Exportieren oder Importieren von Daten für Wartungsstrategien ermöglichen, um einer Datenbankeinheit vorteilhafte Wartungsstrategien zu übermitteln oder von ihr zu importieren. Bei der Verwendung des erfindungsgemäßen zentralen Wartungssystems könnte ein Kommunikationsmittel eine drahtgebundene Datenleitung oder eine drahtlose Datenverbindung, die zwischen einem Flugzeug und einer Bodenstation, einer Datenbankeinheit in einem Flughafengate oder dergleichen aufgebaut werden könnte, realisiert sein.

Schließlich weist ein bevorzugtes erfindungsgemäßes zentrales Wartungssystem ein RFID-Tag auf, das zu seiner Identifizierung dient, da das zentrale Wartungssystem auch generell eine Systemkomponente eines komplexen Systems, beispielsweise eines Fahrzeugs, darstellt.

Weiterhin löst auch ein Verfahren zum Planen von Wartungsvorgängen die Aufgabe der Erfindung. Bei dem erfindungsgemäßen Verfahren könnte eine vorangehend erwähnte Bewertungstabelle Punktzahlen für einzelne Wartungsvorgänge aufweisen, die je nach Erfolg oder Misserfolg eines Wartungsvorgangs um einen bestimmten Betrag erhöht oder gesenkt werden. Ziel ist, bei wiederholt auftretenden Fehlfunktionen anhand entsprechender Punktzahlen einzelner Wartungsvorgänge einen zukünftigen Wartungsvorgang automatisch zu bevorzugen. Beispielsweise könnten dadurch Wartungsvorgänge vermieden werden, die in der Vergangenheit bekanntlich nicht zum Beheben der entsprechenden Fehlfunktion führen konnten. Dadurch kann die Qualität der generierten Wartungshinweise weiter gesteigert werden, wodurch der Anteil von irrtümlich entnommenen und völlig fehlerfreien Systemkomponenten gesenkt werden kann, wodurch sich schließlich die Kosten reduzieren lassen.

In einer bevorzugten Weiterbildung des erfindungsgemäßen Verfahrens werden die Wartungshinweise dynamisch modifiziert, so dass sie bei einmaligem Feststellen einer Fehlfunktion nicht weiterhin statisch auf dem Austausch einer einmal festgestellten Systemkomponente verharrt. Dies hat den besonderen Vorteil, dass beispielsweise Fehler oder Fehlfunktionen, die sich durch Austausch einer Systemkomponente nicht beheben lassen, nicht fortwährend zu den gleichen Wartungshinweisen führen. Durch die stetige, dynamische Neuermittlung eines zu übermittelnden Wartungshinweises können demgemäß potentielle Fehler vermieden und Kosten reduziert werden.

In einer weiteren vorteilhaften Weiterbildung des erfindungsgemäßen Verfahrens werden ausgetauschte Systemkomponenten automatisch ermittelt. Dies hat eine Reihe von Vorteilen für die Erstellung von Wartungshinweisen, denn das Wartungsteam muss keine geänderten Systemkomponentendaten in ein Konfigurationssystem einpflegen, sondern das zentrale Wartungssystem ist in der Lage, selbstständig veränderte Systemkomponenten innerhalb des Flugzeugs ausfindig zu machen. In Kombination mit der Fähigkeit, von Systemen über bestehende Fehlfunktionen oder Ausfälle unterrichtet zu werden, ist das zentrale Wartungssystem dazu eingerichtet, durch Anwendung des erfindungsgemäßen Verfahrens selbstständig feststellen, der Austausch welcher Systemkomponente zum Beheben einer Fehlfunktion geführt oder nicht geführt hat. Besteht beispielsweise eine Fehlfunktion, aufgrund der eine Systemkomponente innerhalb eines Systems ausgetauscht wird und stellt das zentrale Wartungssystem fest, dass eine Systemkomponente ausgetauscht ist und der Austausch nicht zum Beheben der Fehlfunktion geführt hat, kann automatisch die Bewertung des Systemkomponentenaustauschs angepasst werden, indem die entsprechenden Bewertungspunkte reduziert werden. Sollte der Austausch der Systemkomponente jedoch zum Aufheben der Fehlfunktion führen, können durch das erfindungsgemäße Verfahren die entsprechenden Bewertungspunkte für den betreffenden Systemkomponentenaustausch automatisch erhöht werden.

Es ist in einer besonderen Weiterbildung des erfindungsgemäßen Verfahrens bevorzugt, Daten zwischen den einzelnen Systemkomponenten und einer übergeordneten Systemkomponente - etwa einer Steuereinheit - auszutauschen, wobei die Daten beispielsweise Kennungsdaten der entsprechenden Systemkomponenten und deren Funktion beinhalten. Dies könnte beispielsweise mittels eines RFID-Tags in Verbindung mit einem oder mehreren RFID-Lesegeräten realisiert werden. In einem besonderen Szenario könnten beispielsweise alle Systemkomponenten eines Systems mit RFID-Tags ausgeführt sein, durch die das übergeordnete System in der Lage ist, die Existenz der Systemkomponenten festzustellen oder deren Entnahme zu registrieren. Wird beispielsweise eine Systemkomponente mit einem ersten RFID-Tag aus dem System entnommen und eine gleichartige Systemkomponente mit einem zweiten RFID-Tag eingesetzt, ist das System in der Lage, festzustellen, dass das RFID-Tag und dementsprechend die betreffende Systemkomponente nicht mehr innerhalb des Systems angeordnet ist. Gleichzeitig wird eine neue Kennung an dem zweiten RFID-Tag an die Steuereinheit oder dergleichen übermittelt, wodurch diese erkennt, dass eine neue Systemkomponente integriert ist. Sobald die Kennungsdaten beispielsweise auch funktionsidentifizierende Daten aufweisen, kann die Steuereinheit feststellen, dass anstelle der ersten Systemkomponente mit einer entsprechenden Funktionalität eine zweite Systemkomponente mit der gleichen Funktionalität vorhanden ist. Durch Korrelation von Daten über ausgetauschte Systemkomponenten und den Wegfall oder das Auftreten von Fehlfunktionen kann automatisch das Bewertungsschema gemäß obigen Ausführungen dynamisch angepasst werden.

In einer vorteilhaften Weiterbildung des erfindungsgemäßen Verfahrens ermittelt das Konfigurationssystem dynamisch die Systemkomponenten des Systems. Das Konfigurationssystem übermittelt die dynamisch gewonnenen Systemkonfigurationsdaten an das zentrale Wartungssystem. Aus diesem können bei auftretenden Fehlerfällen entsprechende Wartungshinweise generiert werden, die dynamisch mit den eingehenden Konfigurationsdaten und den von zentralen Steuereinheiten kommunizierten Fehlfunktionsdaten abgestimmt sind.

Schließlich wird die Aufgabe auch gelöst durch eine Verwendung eines erfindungsgemäßen zentralen Wartungssystems in einem Flugzeug sowie ebenfalls durch ein Flugzeug mit mindestens einem derartigen Wartungssystem.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1a bis Fig. 1d zeigen eine schematische Übersicht über ein erfindungsgemäßes zentrales Wartungssystem und deren einzelnen Systemkomponenten sowie interagierende Einrichtungen.
Fig. 2 zeigt eine exemplarische Auflistung möglicher Fehlerfälle eines einfachen Systems.
Fig. 3 zeigt eine exemplarische Bewertungstabelle.
Fig. 4 zeigt eine exemplarische Anfangsbewertungstabelle eines Systems.
Fig. 5 zeigt eine exemplarische weiterentwickelte Anfangsbewertungstabelle.
Fig. 6 zeigt eine schematische Übersicht über das erfindungsgemäße Verfahren.
Fig. 7 zeigt ein Flugzeug mit einem erfindungsgemäßen Wartungssystem.

### DETAILLIERTE BESCHREIBUNG DER FIGUREN

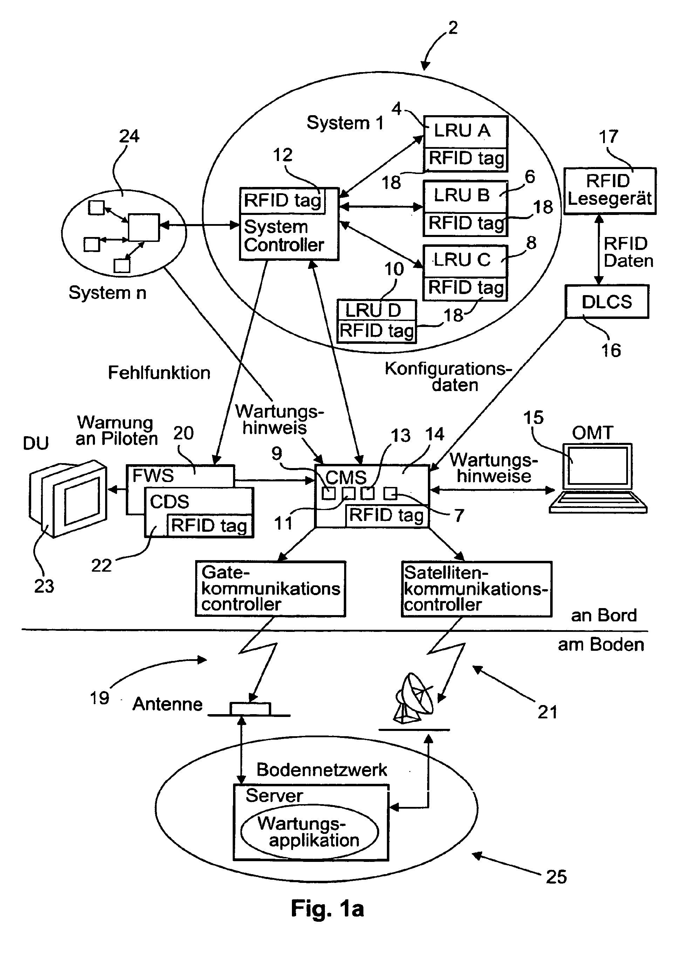

In Fig. 1a ist ein System 2 dargestellt, das mehrere Systemkomponenten 4, 6, 8 und 10 aufweist, die mit "LRU" ("Line Replaceable Unit") A-D bezeichnet sind. Diese einzelnen Systemkomponenten 4 bis 10 werden durch eine zentrale Steuereinheit 12 (im Folgenden und in der Fig. 1a auch "System Controller" genannt) angesteuert, um im Verbund gewünschte Systemfunktionen bereitzustellen. Es ist nicht auszuschließen, dass die einzelnen Systemkomponenten 4 bis 10 einen Defekt oder eine Fehlfunktion entwickeln können, die zu einer nicht ordnungsgemäßen Funktion des Gesamt.

In Fig. 1a ist weiter ein erfindungsgemäßes zentrales Wartungssystem 14 dargestellt, das mit der zentralen Steuereinheit 12 in Verbindung steht und dazu befähigt ist, mit dieser zentralen Steuereinheit zu kommunizieren. Dabei können zwischen der zentralen Steuereinheit 12 und dem zentralen Wartungssystem 14 insbesondere Daten übertragen werden, die die Funktionsfähigkeit des Systems 2 sowie der einzelnen Systemkomponenten 4 bis 10 umfassen. Hierzu ist bevorzugt, dass die zentrale Steuereinheit 12 in der Lage ist, die Funktion der einzelnen Systemkomponenten 4 bis 10 zu überwachen bzw. zumindest Fehlerdaten an das zentrale Wartungssystem 14 zu senden. Das zentrale Wartungssystem weist eine Recheneinheit 9 auf, die über eine zentrale Prozessoreinheit 11, einen Arbeitsspeicher 13 und Eingabe-/Ausgabemittel 7 verfügt.

Das zentrale Wartungssystem 14 ist mit einem bordeigenen Wartungsterminal 15 verbunden, das auch "Onboard Maintenance Terminal (OMT)" genannt wird und dazu eingerichtet ist, Wartungspersonal Informationen über vorzunehmende Wartungsaktionen zu übermitteln.

An dieser Stelle sei darauf hingewiesen, dass die beispielhafte Systemdarstellung aus Fig. 1a nicht zur Interpretation verleiten soll, dass verschiedene Systemkomponenten 4 bis 10 ausschließlich parallel zueinander verwendet werden. Vielmehr ist der Fall denkbar, dass die einzelnen Systemkomponenten 4 bis 10 jeweils aus miteinander interagierenden Unterkomponenten bestehen, die ebenfalls Defekte aufweisen könnten. Gleichermaßen können die Systemkomponenten 4 bis 10 auch in Reihe geschaltet werden, so dass Fehlfunktionen einer der Systemkomponenten 4 bis 10, die mit anderen der Systemkomponenten 4 bis 10 interagiert, nicht unbedingt dieser betreffenden Systemkomponente ohne Weiteres zugeordnet werden können. Dementsprechend kann auch der Fall eintreten, dass von der zentralen Steuereinheit 12 detektierte Fehlfunktionen in einer mehrdeutigen Auswahl von auszutauschenden Systemkomponenten 4 bis 10 resultiert. Aus diesem Grunde kann es dementsprechend passieren, dass die zentrale Steuereinheit 12 dem zentralen Wartungssystem 14 gleich mehrere möglicherweise defekte Systemkomponenten anzeigt, die entsprechend von einem Wartungsteam behandelt werden müssen.

Ferner ist in Fig. 1a ein Konfigurationssystem 16 gezeigt, welches dazu eingerichtet ist, die Konfiguration des Systems 2 in Form von Daten zu speichern, abzurufen und anderen Systemen oder Systemkomponenten verfügbar zu machen.

In dem gezeigten Fall ist das Konfigurationssystem 16 ferner dazu eingerichtet, mit verschiedenen Systemkomponenten 4 bis 10 oder weiteren, der Einfachheit halber nicht dargestellten Systemkomponenten Kenndaten austauschen zu können. Dies wird in einer besonders vorteilhaften Weiterbildung durch Lesen von RFID-Tags 18 durchgeführt, die beispielsweise an den Systemkomponenten 4 bis 10 angeordnet sind. Die Systemkonfigurationsdaten aus dem Konfigurationssystem 16 können auf Abruf dem zentralen Wartungssystem 14 zur Verfügung gestellt werden. Das Konfigurationssystem 16 kann weiterhin mit einem RFID-Lesegerät 17 verbunden sein, das dazu eingerichtet ist, die RFID-Tags 18 der Systemkomponenten 4 bis 10 auszulesen.

Weiterhin wird in der Fig. 1a ein Warnsystem 20 für Piloten gezeigt, ebenso ein zentrales Anzeigesystem 22, das mit mindestens einer Anzeigeeinheit 23, etwa einem Bildschirm, verbunden ist. Sowohl das Warnungssystem 20 als auch das Anzeigesystem 22 mit Anzeigeeinheit 23 dienen zur Information eines Piloten über detektierte Fehlerfälle, die möglicherweise kritisch sein könnten. Über das Warnungssystem 20, welches auch mit "Flight Warning System" (FWS) bezeichnet wird, kann ein Pilot in einem bevorzugten Fall auch Steuerangaben an das zentrale Wartungssystem 14 schicken, um bei Bedarf möglicherweise verschiedene Wartungshinweise zu priorisieren oder dergleichen.

Das zentrale Wartungssystem 14 dient schließlich dazu, aufbereitete Wartungshinweise einem Wartungsteam zur Verfügung zu stellen, so dass Wartungsvorgänge besser planbar gemacht und zudem beschleunigt werden können. Bevorzugt ist das zentrale Wartungssystem 14 dazu eingerichtet, über eine entsprechende Schnittstelle einem Wartungsteam am Boden über ein entsprechendes Ausgabegerät die dynamisch generierten Wartungshinweise zur Verfügung zu stellen, die direkt zum Austauschen entsprechender Systemkomponenten in dem Flugzeug führen.

Ferner werden auch Datenverbindungsmittel 19 und 21 gezeigt, die zwischen einer Datenbankeinheit 25 und dem zentralen Wartungssystem 14 eine Verbindung aufbauen und betreiben können, die zum Importieren oder Exportieren von Wartungsstrategien zwischen dem zentralen Wartungssystem 14 und der Datenbankeinheit 25 erlauben. Beispielsweise könnte die Datenbankeinheit 25 als ein Server ausgeführt sein, der bodengestützt mit zentralen Wartungssystemen von Flugzeugen kommunizieren kann, beispielsweise über drahtlose oder drahtgebundene Verbindungen mit einem Bodennetzwerk eines Flugzeugbetreibers.

Es sei ferner darauf hingewiesen, dass das zentrale Wartungssystem 14 nicht nur in der Lage ist, mit einem einzelnen System 2 zu kommunizieren und die Fehlfunktionen zu erkennen, sondern auch ein zweites System 24 und weitere Systeme, die in Fig. 1a nicht dargestellt sind, zu überwachen.

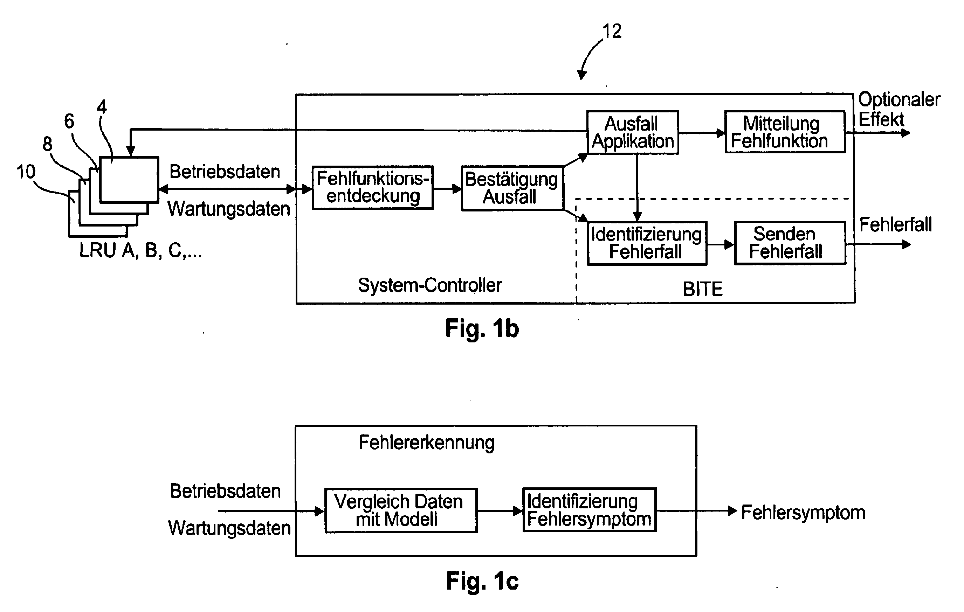

Die durch eine zentrale Steuereinheit 12 durchführbaren Funktionen werden anhand von Fig. 1b demonstriert. Die zentrale Steuereinheit könnte dazu eingerichtet sein, Fehler von Systemkomponenten 4 bis 10 durch Vergleichen von Systemkonfigurationsdaten von mit einem Modell (siehe Fig. 1c) zu identifizieren. Diese Vorgehensweise wird im Folgenden anhand eines Beispiels dargestellt.

Es wird davon ausgegangen, dass eine Systemkomponente ein intelligenter Sensor ist, der auf digitale Weise mit der zentralen Steuereinheit kommuniziert.
- Der intelligente Sensor weist einen internen Mikroprozessor und einen internen Speicher auf und könnte dazu eingerichtet sein, interne Fehlfunktionen zu erkennen, wie etwa: Speicherüberlauf, Speicherfehler, Watchdog-Fehlfunktion, interner Stromversorgungsfehler, interne Temperaturüberschreitung oder dergleichen. In diesem Falle könnte der intelligente Sensor den festgestellten Fehler an die zentrale Steuereinheit senden, unter optionaler Verwendung eines speziellen Protokolls für Wartungsdaten. Derartige Wartungsdaten könnten eine Identifizierung des Fehlersymptoms beinhalten und könnten direkt von der zentralen Steuereinheit von einer Identifizierungsfunktion für Fehlersymptome ausgewertet werden.
- Systemkonfigurationsdaten, die von der Systemkomponente an die zentrale Steuereinheit gesendet werden, beinhalten normalerweise einen Satz von Parametern, in Verbindung mit Validitätsdaten dieser Parameter. Die Parameterwerte werden durch die zentrale Steuereinheit überwacht und für den Fall, dass diese Werte nicht in einem vorgegebenen Bereich liegen, könnte eine Fehlfunktion der Systemkomponente detektiert werden. Dabei könnten die Validitätsdaten der Parameter zusätzliche Informationen für die zentrale Steuereinheit beinhalten, wie etwa eine Information darüber, dass ein vorgegebener Wertebereich überschritten wird:
   i. Dieses Verhalten könnte in der zentralen Steuereinheit oder dem damit verbundenen Wartungssystem mit einem interner Fehler verknüpft sein;
   ii. Dieses Verhalten könnte ferner mit fehlenden Daten verknüpft sein, die von einer anderen Systemkomponente X stamen, welche direkt, z.B. seriell, an die betreffende Systemkomponente angeschlossen ist. Aufgrund der fehlenden Daten von der Systemkomponente X ist die betreffende Systemkomponente nicht in der Lage, zuverlässige Daten zu erzeugen und sendet aus diese Grunde einen Parameter an die zentrale Steuereinheit, der mit der Validitätsinformation "ungültiger Parameter aufgrund ungültiger Eingangsdaten" versehen sein könnte. In diesem Fall wird die zentrale Steuereinheit erkennen, dass der festgestellte Fehler nicht von der betreffenden Systemkomponente stammt, sondern von einer damit verbundenen Systemkomponente X.

Zur eigentlichen Fehlererkennung könnten verschiedene Mechanismen implementiert werden:
- Bereiche für Eingangsparameter definieren, die von anderen Systemkomponenten stammen und aus diesen Bereichen fallende Parameter als Fehlerindikation der betreffenden Systemkomponente werten;
- Überwachen der Validitätsinformationen von Eingangsparameters von anderen Systemkomponenten;
- Komplexe Systemmodelle einschließlich Fehlererkennungsalgorithmen definieren, die die Möglichkeit anbieten, in Echtzeit die Konsistenz sämtlicher Eingangs- und Ausgangsparameter des Systems zu überprüfen.

Zusätzlich könnte vorgesehen werden, in gewissen vorgegebenen Zeitabständen eintreffende automatischen Bestätigungen des Fehlerfalls abzuwarten, um kurzzeitige Systemkonfigurationsdatenabweichungen herauszufiltern. Anschließend werden festgestellte Fehlerfälle und mögliche Funktionsausfälle in Form von entsprechenden Daten ausgegeben.

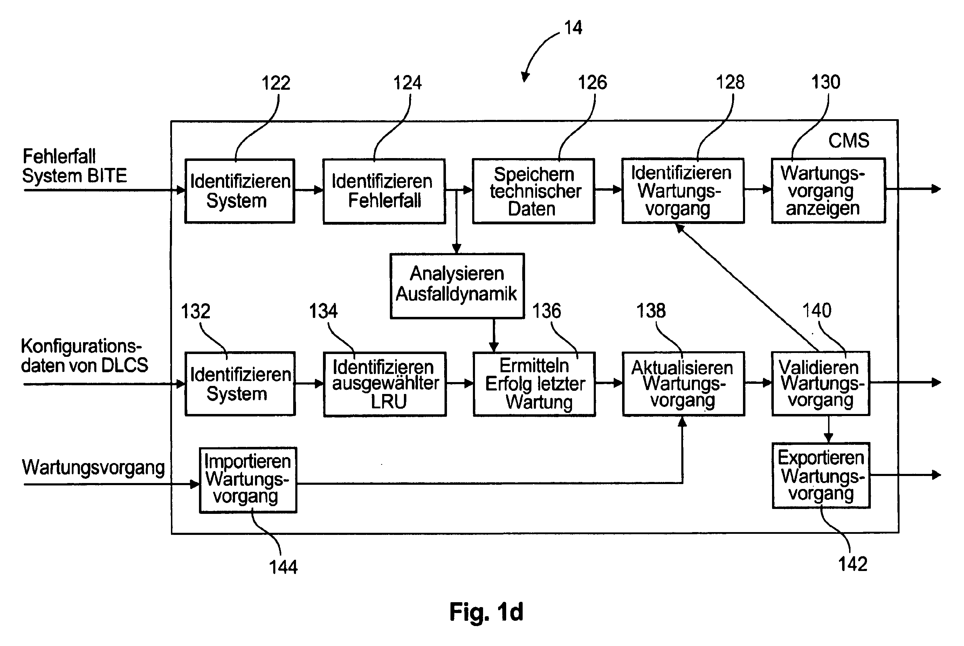

Zusätzlich wird anhand von Fig. 1d die grundlegende Arbeitsweise des erfindungsgemäßen zentralen Wartungssystems in einem Blockschaltbild demonstriert.

Aus einem festgestellten Fehlerfall, der von einer zentralen Steuereinheit 12 eines Systems an das zentrale Wartungssystem 14 gesendet wird, wird das betreffende System identifiziert 122. Dem könnte sich das Identifizieren 124 des kommunizierten Fehlerfalls anschließen, der aus einer Fehlerfalltabelle ausgelesen werden könnte. Das zentrale Wartungssystem 14 könnte dazu eingerichtet sein, Fehlerdaten zu speichern 126, wobei die Fehlerdaten bevorzugt mit auftretenden oder aufgetretenen Fehlerfällen verknüpft werden können. Dem könnte sich das Identifizieren 128 eines Wartungsvorgangs anschließen, was zum Anzeigen 130 eines Wartungshinweises führt.

Weiterhin könnte das zentrale Wartungssystem 14 dazu eingerichtet sein, aus den Systemkonfigurationsdaten des Konfigurationssystems 16 ein betreffendes System zu identifizieren 132. Aus dem eingehenden Datensatz könnte eine Feststellung erfolgen 134, ob eine Systemkomponente in dem betreffenden identifizierten System ausgetauscht worden ist. Dadurch kann gleichzeitig ermittelt werden 136, ob ein vor dem Austausch aufgetretener Fehlerfall durch den Austausch der Systemkomponente behoben worden ist. Diese Feststellung eines durchgeführten Austauschs könnte durch Vergleichen des Datensatzes von dem Konfigurationssystem 16 mit einem vorher eingegangenen Datensatz vollzogen werden oder durch Identifizieren einer Kennzahl oder dergleichen in dem betreffenden Datensatz, die einen durchgeführten Austausch einer Systemkomponente repräsentiert. Daraufhin könnte durch das zentrale Wartungssystem die Aktualisierung einer Bewertungstabelle erfolgen 138, in der Fehlerfälle mit erfolgreichen und erfolglosen Wartungsvorgängen korreliert werden. Das erfindungsgemäße zentrale Wartungssystem ist ferner dazu eingerichtet, nach einer Aktualisierung einer Bewertungstabelle Wartungspersonal aufzufordern, eine festgestellte Änderung einer Wartungsstrategie zu validieren 140.

Schließlich könnte das erfindungsgemäße zentrale Wartungssystem 14 ferner dazu eingerichtet, Wartungsstrategien bzw. aktuelle Bewertungstabellen mit der Korrelation von erfolgreichen und erfolglosen Wartungsvorgängen sowie Fehlerfällen an eine externe Datenbankeinheit 25, zentrale Wartungssysteme anderer Systemverbünde und dergleichen zu exportieren 142. Im Falle der Verwendung der erfindungsgemäßen Aspekte bei Verkehrsflugzeugen wäre vorstellbar, Daten von einem bordeigenen zentralen Wartungssystem eines Verkehrsflugzeugs an eine Datenbankeinheit 25 am Boden zu transferieren, die wiederum dazu eingerichtet ist, Wartungsstrategien von mehreren Verkehrsflugzeugen miteinander zu vergleichen und dadurch selbst besonders erfolgversprechende Wartungsstrategien an sämtliche mit der Datenbankeinheit verbundenen Verkehrsflugzeuge kommunizieren zu können. Das erfindungsgemäße zentrale Wartungssystem könnte dementsprechend durch von extern zugeführte Daten aktualisiert werden 144.

Zur Vereinfachung des Übermittelns von Fehlfunktionen ausgehend von der zentralen Steuereinheit 12 zu dem zentralen Wartungssystem 14 können entsprechende Fehlernachrichten ein dafür geeignetes Format aufweisen. Es wäre beispielsweise möglich, für jede Fehlernachricht einen Satz von fünf einzelnen Parametern zu übermitteln:
1) BITE ID: Dieser Parameter wird dazu verwendet, ein System zu identifizieren, das die Fehlernachricht verschickt. BITE steht dabei für "Built In Test Equipment" und ist für jedes System einzigartig. So ist gewünscht, dass ein System 2 eine andere BITE ID hat als das zweite System 24 aus Fig. 1.
2) Fehlercode: Der Fehlercode steht für die Identifizierung des Fehlerfalls, der durch die zentrale Steuereinheit 12 ermittelt wird. Zur Ermittlung der Fehlercodes wird auf die weiter nachfolgende Beschreibung verwiesen.
3) Zeit: Die Zeit, in der der Fehler aufgetreten ist.
4) Technikdaten: In den Technikdaten könnten Fehlerkontextdaten festgehalten werden.
5) Neusatz: Dieser Parameter könnte beispielsweise als Boolescher Parameter ausgeführt werden, der bei einem Wert 1 dem zentralen Wartungssystem 14 vorgibt, Technikdaten aufzuzeichnen. Andererseits könnte durch Setzen des Neusatz-Parameters zu "0" das zentrale Wartungssystem dazu aufgefordert werden, die Technikdaten nicht aufzuzeichnen. Bevorzugt werden Technikdaten nur begrenzt aufgezeichnet, um Speicher zu sparen. Beispielsweise könnten die Technikdaten zu einem Fehlerfall dreimal hintereinander aufgezeichnet werden, danach könnte der Neusatz-Parameter zu "0" gesetzt werden.

Bevorzugt könnten die Daten, die vom Konfigurationssystem 16 an das zentrale Wartungssystem 14 übermittelt werden, ebenfalls eine bestimmte Struktur aufweisen. So könnte es sinnvoll sein, mindestens drei Parameter in einem Datensatz zu übermitteln:
1) BITE ID: Parameter zum Identifizieren des Systems (siehe oben).
2) FIN: Ein FIN ist eine Funktionsidentifikationsnummer, die für jede Systemkomponente in einem Flugzeug einmalig ist. Ein FIN ist dementsprechend ein Code, der die Funktion sowie den Ort einer Flugzeugkomponente definiert und beschreibt. Durch das Vergeben einer FIN kann die Behandlung eines Datensatzes oder von Wartungshinweisen vereinfacht elektronisch verarbeitet werden, denn durch einzigartige Identifikationsnummern können fehlerhafte Beschreibungen oder fehlerhafte Interpretationen von Beschreibungen minimiert werden.
3) Zeit: Die Zeit, in der eine Systemkomponente ausgetauscht worden ist.

Mit diesen Grundlagen werden die nachfolgenden Figuren näher beschrieben.

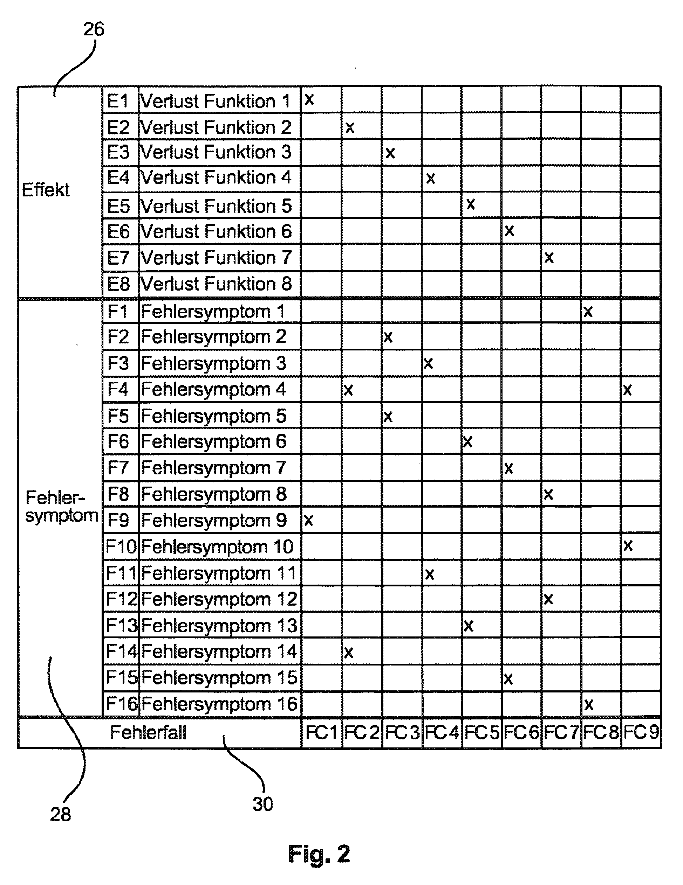

So zeigt Fig. 2 eine Fehlerfalltabelle, in der Betriebseffekte 26 und Fehlersymptome 28 verschiedenen Fehlerfällen 30 gegenübergestellt werden. Die Tabelle in Fig. 2 ist demnach als eine Art Matrix zu verstehen, in der Funktionsausfälle als Betriebseffekte 26 aufgeführt werden, die zusammen mit den Fehlersymptomen 28 zu einer Reihe von verschiedenen, möglichen Fehlerfällen 30 führen. Die Informationen zu den Betriebseffekten 26 und Fehlersymptomen 28 können bereits vorhandenen Unterlagen entnommen werden, die beispielsweise in einem zentralen Wartungssystem nach dem Stand der Technik bekannt sein könnten. Die Korrelation der verschiedenen Fehlersymptome 28 und der Betriebseffekte 26 führt zu verschiedenen Fehlerfällen 30, die ebenso wie die Funktionsidentifikationsnummern (FIN) für jeden Fehlerfall einzigartig sind. Dadurch wird die Beschreibung eines aufgetretenen Fehlers durch die zentrale Steuereinheit 12 stark vereinfacht, denn es muss lediglich aus den erkannten Fehlern über eine wie in Fig. 2 gezeigte Tabelle in eine Fehlerfallnummer übertragen werden, die dann dem zentralen Wartungssystem 14 übermittelt wird. Alternativ dazu ist es auch möglich, dass die zentrale Steuereinheit 12 lediglich mitteilt, welche Betriebseffekte 26 detektiert worden sind und das zentrale Wartungssystem 14 daraus entsprechende Fehlerfallnummern generiert bzw. ermittelt.

Mit den dargestellten Maßnahmen ist es demnach möglich, sowohl auftretende Fehlerfälle als auch sämtliche Systemkomponenten innerhalb eines Flugzeugs jeweils mit einer Zahl oder einem definierten Ausdruck zu beschreiben, so dass eine Behandlung von Fehlerfällen und Systemkomponenten in Datenbanken, Recheneinheiten oder dergleichen stark vereinfacht wird.

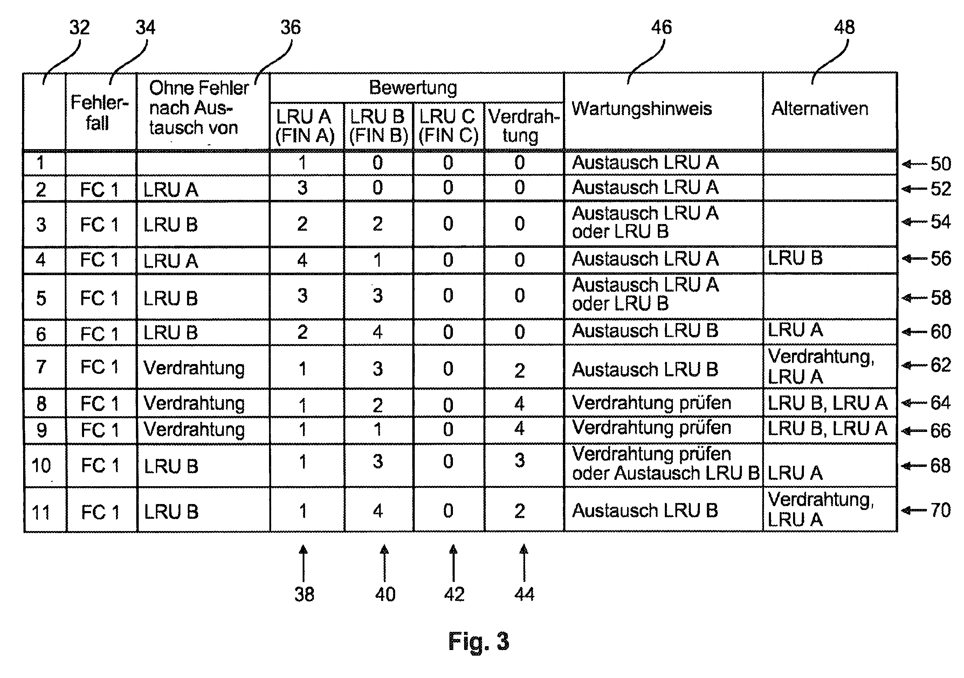

Fig. 3 zeigt eine exemplarische Bewertungstabelle, anhand derer gezeigt werden soll, wie nacheinander auftretende Fehlerfälle und die daraufhin erfolgenden Systemkomponentenaustauschvorgänge zu unterschiedlichen Bewertungen von Austauschvorgängen führen. Die Tabelle in Fig. 3 weist neun Spalten auf. In der ersten Spalte 32 werden lediglich die zeitlichen Abfolgen nummeriert. In der zweiten Spalte 34 werden die auftretenden Fehlerfälle, die in dem zentralen Wartungssystem 14 identifiziert vorliegen, eingetragen. In der dritten Spalte 36 wird aufgeführt, nach welchem Austauschvorgang der Fehler verschwunden ist. Die vierte bis siebte Spalte 38 bis 44 beinhalten Bewertungspunkte für die erste Systemkomponente 4, die zweite Systemkomponente 6, die dritte Systemkomponente 8 und eine weitere Systemkomponente "Verdrahtung". In der achten Spalte 46 wird ein resultierender Wartungshinweis gezeigt. In der neunten Spalte 48 werden alternative Austauschvorgänge oder andere Wartungsvorgänge gezeigt.

In der ersten Zeile liegt eine Anfangsbewertung 50 vor. Dort weist die erste Systemkomponente 4 eine Bewertungspunktzahl von "1" auf, wohingegen die zweite Systemkomponente 6 (Spalte 40), die dritte Systemkomponente 8 (Spalte 42) und Verdrahtung (Spalte 44) jeweils "0" aufweisen. Tritt nun ein Fehler auf, würde sich aufgrund der Anfangsbewertung 50 ein Wartungshinweis (Spalte 46) ergeben, der das Austauschen der ersten Systemkomponente 4 (Spalte 38) vorschlägt. Aufgrund der Anfangsbewertung "0" für die anderen verbleibenden Systemkomponenten ergibt sich in dem entsprechenden Wartungshinweis kein alternativer Wartungs- oder Austauschvorschlag.

In der nächsten Zeile 52 ist in der zweiten Spalte 34 festgehalten, welcher Fehlerfall aufgetreten ist, in diesem Fall war dies mit Fehlerfall "FC1" zu bezeichnen. In der dritten Spalte 36 ist festgehalten, dass der Fehler nach Austausch der ersten Systemkomponente 4 (LRU A) verschwunden ist. Dies führt dazu, dass die Bewertungspunkte für den Austausch dieser ersten Systemkomponente in der Spalte 38 hier beispielhaft um 2 erhöht wird. Aus dem anfänglichen, in Zeile 50 ersichtlichen Wert "1" ergibt sich demzufolge in Zeile 52 "3". Für die verbleibenden Systemkomponenten 6 und 8 sowie die Verdrahtung in den Spalten 40 - 44 bleibt nach wie vor "0" stehen. Aufgrund der höchsten Bewertungspunktzahl der ersten Systemkomponente 4 ergibt sich in Spalte 46 ein Wartungshinweis, der auf das Austauschen der ersten Systemkomponente 4 gerichtet ist. Da sämtliche verbleibenden Systemkomponenten lediglich eine Bewertungspunktzahl von "0" haben, ergibt sich in Spalte 48 in Zeile 52 auch kein alternativer Wartungsvorschlag.

In Zeile 54 und Spalte 36 ist zu sehen, dass der auftretende Fehler erst durch Austausch der zweiten Systemkomponente 6 behoben werden konnte. Demzufolge muss die Bewertungspunktezahl für die erste Systemkomponente 4 in Spalte 38 verringert werden, dies geschieht exemplarisch durch die Reduktion von 1. In der Spalte 40 ist die Erhöhung der Bewertungspunktezahl für den Austausch der zweiten Systemkomponente 6 um 2 ersichtlich. Die verbleibenden Systemkomponenten weisen stets die gleiche Bewertungspunktezahl "0" auf. Da das Austauschen der ersten Systemkomponente 4 und der zweiten Systemkomponente 6 eine identische Bewertungspunktezahl aufweisen, lautet der Wartungshinweis in Spalte 46 "Austauschen von erster Systemkomponente 4 und zweiter Systemkomponente 6". Es gibt keine alternativen Wartungsvorschläge.

Erfolgt hiernach erst eine Fehlerbehebung durch den Austausch der ersten Systemkomponente 4, ist in Zeile 56 ersichtlich, dass erneut die Bewertungspunktezahl für die erste Systemkomponente 4 um 2 erhöht wird, die Bewertungspunktezahl für die zweite Systemkomponente 6 um 1 verringert wird und die verbleibenden Systemkomponenten eine Bewertungspunktezahl von "0" aufweisen. Demzufolge lautet der neue Wartungshinweis bei erneut auftretendem Fehlerfall "Austauschen der ersten Systemkomponente 4". Da nun eine Systemkomponente eine Bewertungspunktezahl aufweist, die geringer ist als die einer anderen Systemkomponente, aber größer als "0" ist, ergibt sich in Spalte 48 in Zeile 56 zum ersten Mal ein alternativer Wartungsvorschlag. Dementsprechend ist das erfindungsgemäße Verfahren in der Lage, aus vergangenen Austauschvorgängen einer zweiten Systemkomponente 6 darauf zu schließen, dass prinzipiell wahrscheinlich die erste Systemkomponente 4 auszutauschen ist, es allerdings auch möglich sein könnte (mit geringerer Wahrscheinlichkeit), dass die zweite Systemkomponente 6 ausgetauscht werden muss, um den aufgetretenen Fehler zu beheben.

In weiter nachfolgenden Zeilen 58 - 70 sind weitere Fälle beschrieben, in denen entweder der Austausch der ersten Systemkomponente 4, der Austausch der zweiten Systemkomponente 6 oder der Austausch oder die Wartung einer Verdrahtung (siehe Spalte 44) zum Aufheben des Fehlers führt. Dementsprechend "lernt" das zentrale Wartungssystem 14 aus vorangegangenen Fehlern und kann dementsprechend die Wartungshinweise (siehe Spalte 46) entsprechend anpassen. So ist nicht statisch vorgegeben, dass beispielsweise die erste Systemkomponente 4 bei Fehler XY ausgetauscht werden müsste, sondern bei jedem auftretenden Fehler wird die Historie genau dieses Fehlers erneut betrachtet, um eine möglichst genaue Aussage darüber treffen zu können, welcher Wartungsvorgang zum Aufheben des Fehlers führen könnte. Dies kann bei dem gezeigten Beispiel auch dazu führen, dass beispielsweise in den Zeilen 64 und 66 lediglich vorgeschlagen wird, die Verdrahtung zu überprüfen, alternativ dazu aber auch die zweite Systemkomponente 6 oder die erste Systemkomponente 4 ausgetauscht werden könnten.

Die Bewertungspunktezahlen werden in Spalten 38 - 44 auf die gezeigte exemplarische Weise modifiziert, so dass eventuelle Algorithmusfehler bei der Bestimmung neuer Bewertungspunktezahlen nicht dazu führen können, eventuell fälschlicherweise als defekt angesehene Systemkomponenten in einem nächsten Wartungsschritt direkt als vorgeschriebene, auszutauschende Systemkomponente vorzuschlagen. Durch die Verteilung der Punkte wie vorangehend beschrieben, werden mindestens zwei erfolgreiche Wartungsvorgänge für jede Systemkomponente benötigt, damit diese Systemkomponente in einem nächsten Bewertungsschritt in den Wartungshinweis mit aufgenommen wird. Dies steigert die Sicherheit und Zuverlässigkeit des zentralen Wartungssystems.

Die in Spalte 36 eingetragenen Parameter können nicht nur manuell gewonnen werden, sondern auch automatisch durch Austauschen von Systemkomponenten und der anschließenden Feststellung der Fehlerfreiheit. Die ausgetauschte Systemkomponente kann beispielsweise, wie vorangehend in der Beschreibungseinleitung geschildert und in Fig. 1 gezeigt, durch die RFID-Technologie identifiziert werden.

Das zentrale Wartungssystem kann ferner einige Funktionen aufweisen, die das "Aufräumen" der Historie von Wartungsvorgängen erleichtern. Beispielsweise könnten sämtliche Bewertungspunkte, die den Wert "1" tragen und älter als ein Jahr sind, auf "0" gesetzt werden. Weiterhin könnten die Alternativvorschläge nach bestimmten Zeiteinträgen sortiert werden.

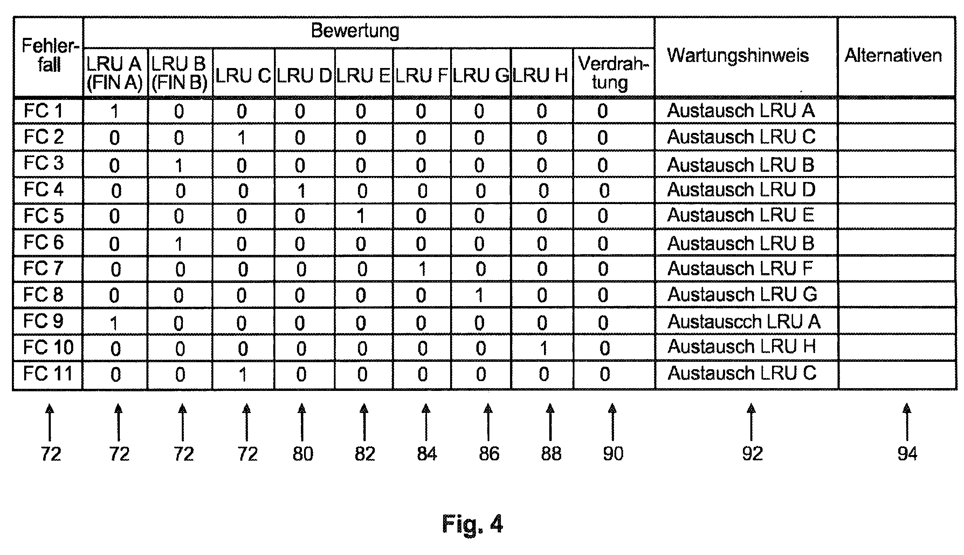

In Fig. 4 wird gezeigt, dass das zentrale Wartungssystem eine Anfangssystembewertungstabelle aufweist, die verschiedene Wartungsvorschläge für alle möglichen Fehlerfälle und die Bewertungspunkte für alle Systemkomponenten in dem System aufweist. So zeigt die Spalte 72 die verschiedenen Fehlerfälle, die Spalten 74 - 90 die Anfangsbewertungspunkte für alle möglichen verschiedenen Systemkomponenten, die Spalte 90 die unterschiedlichen Wartungsvorschläge für die einzelnen Fehlerfälle aus Spalte 72 und die Spalte 94 alternative Wartungsvorschläge.

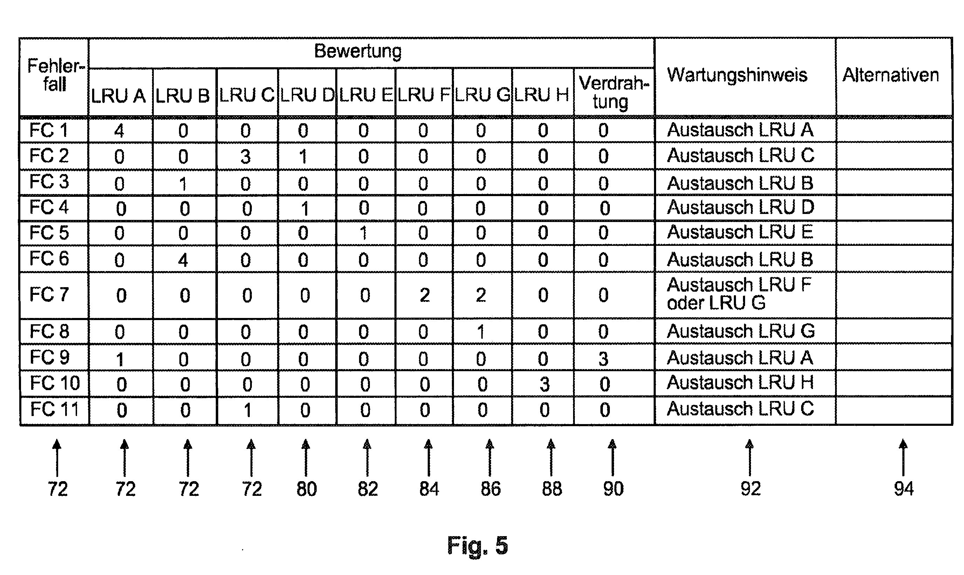

In Fig. 5 wird eine weiterentwickelte Systembewertungspunktetabelle vorgestellt, die der aus Fig. 4 ähnelt, jedoch in den Spalten 74 - 90 unterschiedliche Bewertungspunktezahlen aufweist. Die Tabelle in Fig. 5 steht exemplarisch für die Weiterentwicklung einer Tabelle aus Fig. 4, in die verschiedene Wartungshistorien aus einem oder mehreren Flugzeugen eingegangen sind. Besitzt beispielsweise eine Fluglinie mehrere Flugzeuge eines gleichen Typs und produzieren jeweils die zentralen Wartungssysteme 14 der Flugzeuge unterschiedliche Bewertungspunktezahlen für die unterschiedlichen Systeme, können die Bewertungstabellen von mehreren oder allen Flugzeugen zu einer weiter entwickelten Systembewertungstabelle aus Fig. 5 zusammengefasst werden. Werden beispielsweise weitere Flugzeuge des gleichen Typs in Betrieb genommen, können die zentralen Wartungssysteme mit einer Systembewertungstabelle aus Fig. 5 ausgestattet werden, so dass gleich die Erfahrung von mehreren Flugzeugen und vielen Wartungsvorgängen bereits in die neuen Flugzeuge einfließen können. Dies hat den Vorteil, dass weitere Kosten gespart werden können, die entweder mit einem herkömmlichen Wartungssystem entstehen, das statische Wartungshinweise ausgibt, oder sogar mit einem erfindungsgemäßen zentralen Wartungssystem, welches noch keinen Lernvorgang ausgeführt hat.

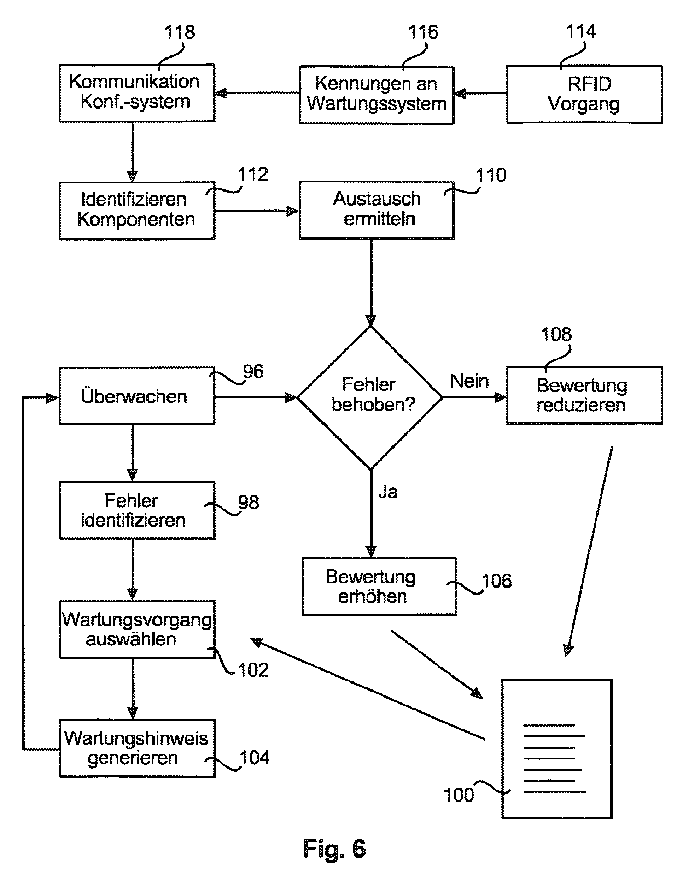

In Fig. 6 wird das erfindungsgemäße Verfahren in einer Übersicht gezeigt. Das System 14 wird auf Fehler überwacht 96. Tritt ein Fehler auf, wird er identifiziert 98 und mittels einer Bewertungstabelle 100 wird ein Wartungsvorgang 102 ausgewählt. Anschließend wird ein Wartungshinweis generiert 104. Nach Durchführen des Wartungsvorgangs wird die Bewertung des durchgeführten Wartungsvorgangs an den Status des Fehlers nach dem Wartungsvorgang angepasst, indem die entsprechende Bewertung erhöht wird 106 oder reduziert wird 108. Bevorzugt wird ein etwaiger Austausch von Systemkomponenten ermittelt 110, wofür das Identifizieren 112 der momentan installierten Systemkomponenten notwendig ist. Dafür könnten etwa mittels eines RFID-Vorgangs 114 über mindestens ein RFID-Lesegerät und an den Systemkomponenten angeordneten RFID-Tags die Systemkomponenten des Systems ermittelt werden. Die ermittelten Systemkomponenten könnten jeweils eine spezifische Kennung aufweisen, die an ein Wartungssystem übermittelt 116 werden könnten. Durch Kommunikation mit dem Konfigurationssystem wird sodann das Identifizieren 112 der momentan installierten Systemkomponenten ermöglicht. Dies macht wiederum die Ermittlung 110 des Austauschs von Systemkomponenten möglich.

Das dargestellte Verfahren kann kontinuierlich oder auf Anforderung durchgeführt werden, so dass nach Generieren 104 eines Wartungshinweises die Überwachung des betreffenden Systems weiter vorgenommen wird.

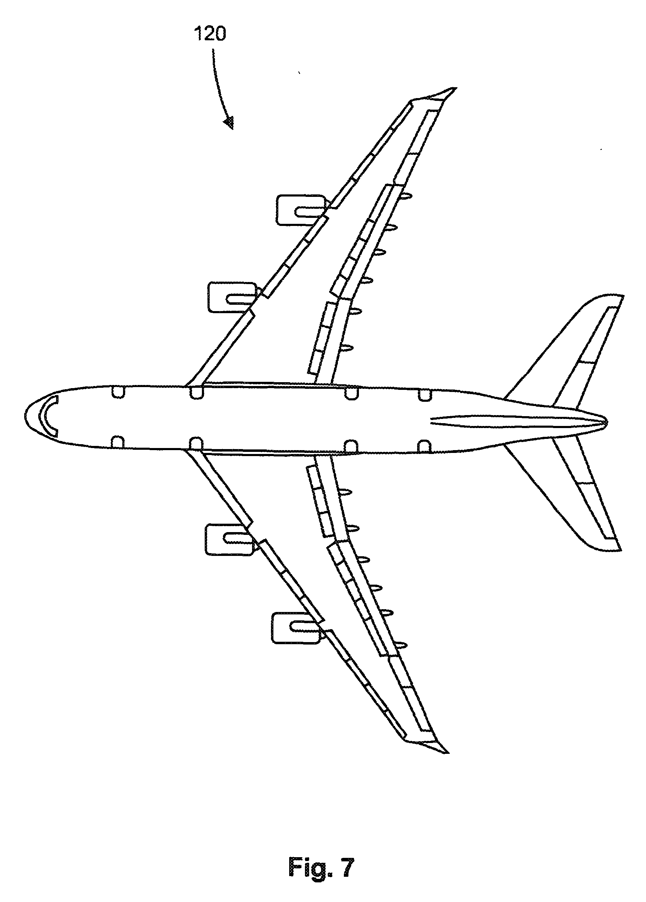

Fig. 7 zeigt schließlich ein Flugzeug 96 mit mindestens einem erfindungsgemäßen zentralen Wartungssystem 14.

Ergänzend ist darauf hinzuweisen, dass "aufweisend" keine anderen Elemente oder Schritte ausschließt und "eine" oder "ein" keine Vielzahl ausschließt.

### BEZUGSZEICHEN

- 2: System
- 4: Systemkomponente (LRU)
- 6: Systemkomponente (LRU)
- 7: Eingabe-/Ausgabemittel
- 8: Systemkomponente (LRU)
- 9: Recheneinheit
- 10: Systemkomponente (LRU)
- 11: zentrale Prozessoreinheit
- 12: zentrale Steuereinheit
- 13: Arbeitsspeicher
- 14: zentrales Wartungssystem
- 15: Wartungsterminal
- 16: Konfigurationssystem
- 17: RFID-Lesegerät
- 18: RFID-Tag
- 19: Datenverbindungsmittel
- 20: Warnsystem
- 21: Datenverbindungsmittel
- 22: Anzeigesystem
- 23: Anzeigeeinheit
- 24: System
- 25: Datenbankeinheit
- 26: Betriebseffekte
- 28: Fehlersymptome
- 30: Fehlerfälle
- 32: Spalte: zeitliche Abfolge
- 34: Spalte: Fehlerfälle
- 36: Spalte: Austauschvorgang und verschwindender Fehler
- 38: Spalte: Bewertungspunkte
- 40: Spalte: Bewertungspunkte
- 42: Spalte: Bewertungspunkte
- 44: Spalte: Bewertungspunkte
- 46: Spalte: Wartungshinweis
- 48: Spalte: Alternativen
- 50: Zeile: Anfangsbewertung
- 52: Zeile: Vorgang
- 54: Zeile: Vorgang
- 56: Zeile: Vorgang
- 58: Zeile: Vorgang
- 60: Zeile: Vorgang
- 62: Zeile: Vorgang
- 64: Zeile: Vorgang
- 66: Zeile: Vorgang
- 68: Zeile: Vorgang
- 70: Zeile: Vorgang
- 72: Spalte: Fehlerfälle
- 74: Spalte: Bewertungspunkte
- 76: Spalte: Bewertungspunkte
- 78: Spalte: Bewertungspunkte
- 80: Spalte: Bewertungspunkte
- 82: Spalte: Bewertungspunkte
- 84: Spalte: Bewertungspunkte
- 86: Spalte: Bewertungspunkte
- 88: Spalte: Bewertungspunkte
- 90: Spalte: Bewertungspunkte
- 92: Spalte: Wartungshinweis
- 94: Spalte: Alternativen
- 96: Überwachen
- 98: Identifizieren Fehler
- 100: Bewertungstabelle
- 102: Auswählen Wartungsvorgang
- 104: Generieren Wartungshinweis
- 106: Bewertung erhöhen
- 108: Bewertung reduzieren
- 110: Austausch von Systemkomponenten ermitteln
- 112: Identifizieren von Systemkomponenten
- 114: RFID-Vorgang
- 116: Kennungen von Systemkomponenten an Wartungssystem übermitteln
- 118: Kommunikation mit Konfigurationssystem
- 120: Flugzeug
- 122: Identifizieren
- 124: Identifizieren
- 126: Speichern
- 128: Identifizieren
- 130: Anzeigen
- 132: Identifizieren
- 134: Austausch feststellen
- 136: Aktualisieren
- 138: Validieren
- 140: Validieren
- 142: Exportieren
- 144: Aktualisieren

## Patentansprüche

1. Wartungssystem zum Erzeugen von Wartungshinweisen mindestens eines mehrere Systemkomponenten beinhaltenden Systems, aufweisend
- mindestens eine Recheneinheit (9) und
- mindestens ein Eingabe-/Ausgabemittel (7);
wobei das Wartungssystem (14) dazu eingerichtet ist, Systemkonfigurationsdaten des Systems von einer zentralen Steuereinheit (12) des Systems (2, 24) zu empfangen;
wobei das Wartungssystem (14) dazu eingerichtet ist, aus den Systemkonfigurationsdaten einen Fehlerfall einer Systemkomponente (4, 6, 8, 10) zu identifizieren;
wobei das Wartungssystem (14) dazu eingerichtet ist, bereits durchgeführte oder vorgegebene Wartungsvorgänge, die mit bekannten Fehlerfällen korreliert sind, aus einem Arbeitsspeicher abzurufen und einen für den identifizierten Fehlerfall korrelierenden Wartungsvorgangs zum Beheben des Fehlerfalls auszuwählen und als Wartungshinweis auszugeben,
**gekennzeichnet dadurch, dass** die Recheneinheit (9) dazu eingerichtet ist, aus über das Eingabe-/Ausgabemittel empfangenen Systemkonfigurationsdaten durch Vergleichen mit älteren Systemkonfigurationsdaten den Austausch einer Systemkomponente (4, 6, 8, 10) zu erkennen und durch Korrelation von Systemstatusdaten mit Systemkonfigurationsdaten die Behebung eines identifizierten Fehlerfalls zu erkennen.

2. Wartungssystem nach Anspruch 1, das dazu eingerichtet ist, durch Vergleichen von über das Eingabe-/Ausgabemittel (7) empfangenen Fehlerdaten aus der zentralen Steuereinheit oder von Betriebsdaten aus der zentralen Steuereinheit mit bekannten Fehlerdaten oder Betriebsdatenabweichungen, die mit Fehlerfällen verknüpft in dem Wartungssystem bereitgestellt sind, den Fehlerfall der Systemkomponente (4, 6, 8, 10) zu identifizieren.

3. Verfahren zum Planen von Wartungsvorgängen eines Systems, aufweisend die Schritte:
- Überwachen (96) des Systems auf Fehler,
- Generieren (104) eines Wartungshinweises beinhaltend Informationen über einen durchzuführenden Wartungsvorgang bei auftretendem Fehler, wobei ein Wartungsvorgang aus einer Bewertungstabelle ausgewählt (102) wird, der mit dem aufgetretenen Fehler korreliert und die höchste Bewertung aufweist, **gekennzeichnet durch** die Schritte:
- Überwachen des Systems auf Austausch von Systemkomponenten (4, 6, 8,10) aus über ein Eingabe-/Ausgabemittel empfangenen Betriebsdaten **durch** Vergleichen mit älteren Betriebsdaten sowie daraufhin des Behebens eines identifizierten Fehlers **durch** Korrelation von Systemstatusdaten mit Systemkonfigurationsdaten und
- Anpassen (106, 108) der Bewerten des durchgeführten Wartungsvorgangs in der Bewertungstabelle (100) in Abhängigkeit des Status des Fehlers nach dem Wartungsvorgang.

4. Verfahren nach Anspruch 3, wobei jeder mögliche Wartungsvorgang in der Bewertungstabelle eine Bewertungspunktezahl aufweist, wobei die zu einem Fehlerfall gehörige Bewertungspunktezahl eines Wartungsvorgangs je nach Status des Fehlers nach Durchführen des Wartungsvorgangs erhöht oder verringert wird.

5. Verfahren nach Anspruch 4, wobei in der Bewertungstabelle (100) mindestens ein Wartungsvorgang eine von Null verschiedene Bewertungspunktezahl aufweist.

6. Verfahren nach Anspruch 3 oder 4, wobei die Bewertungspunktezahl eines Wartungsvorgangs für einen auftretenden Fehlerfall erhöht (106) wird, wenn der Wartungsvorgang zu einem Beheben des Fehlers führt.

7. Verfahren nach einem der Ansprüche 3 bis 6, wobei die Bewertungspunktezahl eines Wartungsvorgangs für einen auftretenden Fehlerfall verringert (108) wird, wenn der Wartungsvorgang nicht zu einem Beheben des Fehlers führt.

8. Verfahren nach einem der Ansprüche 3 bis 7, wobei ein zentrales Wartungssystem ein Austauschen einer Systemkomponente des Systems ermittelt (110).

9. Verfahren nach Anspruch 8, wobei das zentrale Wartungssystem das Vorhandensein sämtlicher Systemkomponenten des Systems ermittelt (112).

10. Verfahren nach Anspruch 8 oder 9, wobei das zentrale Wartungssystem mittels mindestens eines RFID-Lesegeräts und an den Systemkomponenten angeordneten RFID-Tags die Systemkomponenten des Systems identifiziert (112).

11. Verfahren nach Anspruch 9, wobei die Systemkomponenten des Systems eine Kennung aufweisen, die an das zentrale Wartungssystem übermittelt (116) wird.

12. Verfahren nach einem der Ansprüche 3 bis 11, wobei das zentrale Wartungssystem mit einem Konfigurationssystem kommuniziert (118) und Daten über in dem System installierte Systemkomponenten übermittelt werden.

13. Verwendung eines Wartungssystems nach Anspruch 1 in einem Fahrzeug.

14. Fahrzeug mit einem Wartungssystem nach Anspruch 1.

## Claims

1. A maintenance system for generating maintenance information on at least one system that contains several system components, comprising
- at least one arithmetic unit (9) and
- at least one input/output means (7);
wherein the maintenance system (14) is designed for receiving system configuration data of the system from a central control unit (12) of the system (2, 24);
wherein the maintenance system (14) is adapted for identifying a fault of a system component (4, 6, 8, 10) based on the system configuration data;
wherein the maintenance system (14) is designed for retrieving already performed or predefined maintenance operations that are correlated to the known faults from a working memory, and for selecting and outputting a maintenance operation as a maintenance information, which maintenance operation is correlated with the identified fault in order to correct the fault,
**characterised in that** the arithmetic unit (9) is adapted for identifying whether a system component (4, 6, 8, 10) has been replaced by comparing system configuration data received via the input/output means with older system configuration data and for determining whether an identified fault is corrected through correlation of system status data with system configuration data.

2. The maintenance system of claim 1 that is adapted for identifying the fault of the system component (4, 6, 8, 10) by comparing fault data of the central control unit received via the input/output means (7) or operational data of the central control unit with known fault data or operational data deviations that are linked to faults and made available in the maintenance system.

3. A method for planning maintenance operations of a system, comprising the steps:
- monitoring (96) the system for faults,
- generating (104) maintenance information that contains information on a maintenance operation to be carried out if a fault occurs, wherein a maintenance operation that is correlated to the occurred fault and has the highest rating is selected (102) from a rating table,
**characterized by** the steps:
- monitoring the system for replacement of system components (4, 6, 8, 10) from operation data received through an input/output means by comparing with older operation data as well as the correction of an identified fault subsequently by correlation of system status data with system configuration data, and
- adapting (106, 108) the rating of the performed maintenance operation in the rating table (100) in dependence on the status of the fault after the maintenance operation.

4. The method of claim 3, wherein every potential maintenance operation has a point rating in the rating table, wherein the point rating of a maintenance operation for correcting a fault is increased or decreased depending on the status of the fault after carrying out the maintenance operation.

5. The method of claim 4, wherein at least one maintenance operation has a point rating other than zero in the rating table (100).

6. The method of claim 3 or 4, wherein the point rating of a maintenance operation for an occurred fault is increased (106) if the maintenance operation results in correcting the fault.

7. The method of one of claims 3 to 6, wherein the point rating of a maintenance operation for an occurred fault is decreased (108), if the maintenance operation does not result in correcting the fault.

8. The method of one of claims 3 to 7, wherein a central maintenance system determines (110) the replacement of a component of the system.

9. The method of claim 8, wherein the central maintenance system determines (112) the presence of all components of the system.

10. The method of claim 8 or 9, wherein the central maintenance system identifies (112) the system components of the system by means of an RFID scanner and RFID tags arranged on the system components.

11. The method of claim 9, wherein the system components of the system comprise an identification that is transmitted (116) to the central maintenance system.

12. The method of one of claims 3 to 11, wherein the central maintenance system communicates (118) with a configuration system and data on system components installed in the system is transmitted.

13. The use of a maintenance system of claim 1 in a vehicle.

14. A vehicle with a maintenance system of claim 1.

## Revendications

1. Système de maintenance destiné à générer des instructions de maintenance d'au moins un système contenant plusieurs composants de système, présentant :
- au moins une unité de calcul (9) et
- au moins un moyen d'entrée/de sortie (7) ;
dans lequel le système de maintenance (14) est apte à recevoir d'une unité de commande centrale (12) du système (2, 24) des données de configuration du système ;
dans lequel le système de maintenance (14) est apte à identifier un cas d'erreur d'un composant (4, 6, 8, 10) du système à partir des données de configuration du système ;
dans lequel le système de maintenance (14) est apte à appeler, à partir d'une mémoire de travail, des opérations de maintenance déjà réalisées ou prédéfinies, lesquelles sont corrélées avec des cas d'erreur connus, et à sélectionner une opération de maintenance mettant en corrélation avec le cas d'erreur identifié, afin de supprimer le cas d'erreur et pour le sortir comme instruction de maintenance,
**caractérisé en ce que** l'unité de calcul (9) apte à détecter l'échange d'un composant (4, 6, 8, 10) de système à partir de données de configuration du système reçues par l'intermédiaire du moyen d'entrée/de sortie, par comparaison avec des données de configuration de système plus anciennes, et à détecter la suppression d'un cas d'erreur identifié, par corrélation de données d'état du système avec des données de configuration du système.

2. Système de maintenance selon la revendication 1, lequel est apte à identifier le cas d'erreur des composants (4, 6, 8, 10) du système par comparaison de données d'erreur en provenance de l'unité de commande centrale, reçues par l'intermédiaire du moyen d'entrée/de sortie, ou de données d'exploitation en provenance de l'unité de commande centrale, avec des données d'erreur connues ou des différences de données d'exploitation, qui sont disponibles dans le système de maintenance en étant liées à des cas d'erreur.

3. Procédé de planification d'opérations de maintenance d'un système, présentant les étapes consistant à :
- surveiller (96) le système pour constater s'il y a des erreurs,
- générer (104) une instruction de maintenance contenant des informations sur une opération de maintenance à réaliser en cas d'apparition d'une erreur, dans lequel une opération de maintenance est sélectionnée (102) à partir d'un tableau d'évaluation qui met en corrélation avec l'erreur apparue et présente l'évaluation la plus élevée, **caractérisé par** les étapes consistant à :
- surveiller le système pour constater l'échange de composants (4, 6, 8,10) du système à partir de données d'exploitation reçues par l'intermédiaire d'un moyen d'entrée/de sortie, par comparaison avec des données d'exploitation plus anciennes, et ensuite supprimer une erreur identifiée par corrélation de données d'état du système avec des données de configuration du système, et
- adapter (106, 108), dans le tableau d'évaluation (100), l'évaluation de l'opération de maintenance réalisée, en fonction de l'état de l'erreur après l'opération de maintenance.

4. Procédé selon la revendication 3, dans lequel chaque opération de maintenance possible présente un nombre de points d'évaluation dans le tableau d'évaluation, dans lequel le nombre de points d'évaluation, associé à un cas d'erreur, d'une opération de maintenance, est augmenté ou diminué selon l'état de l'erreur après la réalisation de l'opération de maintenance.

5. Procédé selon la revendication 4, dans lequel, dans le tableau d'évaluation (100), au moins une opération de maintenance présente un nombre de points d'évaluation différent de zéro.

6. Procédé selon la revendication 3 ou 4, dans lequel le nombre de points d'évaluation d'une opération de maintenance est augmenté (106) pour un cas d'erreur se produisant, lorsque l'opération de maintenance entraîne une suppression de l'erreur.

7. Procédé selon l'une quelconque des revendications 3 à 6, dans lequel le nombre de points d'évaluation d'une opération de maintenance est diminué (108) pour un cas d'erreur se produisant, lorsque l'opération de maintenance n'entraîne pas la suppression de l'erreur.

8. Procédé selon l'une quelconque des revendications 3 à 7, dans lequel un système de maintenance central détecte (110) un remplacement d'un composant du système.

9. Procédé selon la revendication 8, dans lequel le système de maintenance central détecte (112) la présence de tous les composants du système.

10. Procédé selon la revendication 8 ou 9, dans lequel le système de maintenance central identifie (112) les composants du système au moyen d'au moins un appareil de lecture RFID et de balises RFID disposées sur les composants de système.

11. Procédé selon la revendication 9, dans lequel les composants du système présentent un identifiant qui est transmis (116) au système de maintenance central.

12. Procédé selon l'une quelconque des revendications 3 à 11, dans lequel le système de maintenance central communique (118) avec un système de configuration, et dans lequel des données sont transmises par l'intermédiaire de composants de système installés dans le système.

13. Utilisation dans un véhicule d'un système de maintenance selon la revendication 1.

14. Véhicule doté d'un système de maintenance selon la revendication 1.
